# EUROPEAN PATENT APPLICATION

(11) **EP 4 317 725 A1**
(43) Date of publication of application: **07.02.2024**
(21) Application number: 22780325.1
(22) Date of filing: 22.03.2022
(51) Int. Cl.: F16C 29/06

(54) **LINEAR MOTION GUIDING DEVICE**

(30) Priority: 29.03.2021 JP 2021055678
(71) Applicant: NSK Ltd., Tokyo 141-8560 (JP)
(72) Inventor: OHKUBO Tsutomu, Fujisawa-shi, Kanagawa 252-0811 (JP)
(74) Representative: Grünecker Patent- und Rechtsanwälte PartG mbB
(86) International application number: PCT/JP2022/013212
(87) International publication number: WO 2022/210110

(57) **Abstract**

A guide rail of a linear motion guiding device has a mounting hole for fixing to a mounting portion with a bolt. The mounting hole has a counterbore portion and a shaft accommodation portion, and a cap that closes the counterbore portion is press-fitted. The cap is formed by molding a disk-shaped main body portion that closes an opening portion of the counterbore portion and a cylinder portion that extends from the main body portion, and the cylinder portion is formed with an interference portion and a foreign matter accommodation portion. In the main body portion, a main body portion top surface before press-fitting is a curved surface that is recessed toward the cylinder portion as going toward an axial center of the cap such that the main body portion top surface on a side opposite to the cylinder portion in a shaft direction of the main body portion becomes nearly flat due to deflection of the cylinder portion caused by the press-fitting.

## Description

### TECHNICAL FIELD

The present invention relates to a linear motion guiding device.

### BACKGROUND ART

In order to fix a linear motion guiding device, which includes a guide rail, a slider that moves with respect to the guide rail, and a plurality of rolling elements housed in the slider, to a mounting portion, the guide rail is provided with mounting holes for fixing to the mounting portion with bolts. Caps for closing the mounting holes provided in the guide rails are known (Patent Literatures 1 to 3). The cap disclosed in Patent Literature 1 is configured with a main body and an O-ring. The main body is formed by integrally forming a short columnar portion and a plurality of projections, and the short columnar portion has a plurality of projections that are along an outer peripheral surface of a large-diameter portion and that serve as an interference for a counterbore portion. The cap disclosed in Patent Literature 2 is configured with a columnar main body and a ring-shaped peripheral edge member. The main body is made of metal and the peripheral edge member is made of elastomer. An outer diameter of the peripheral edge member is greater than a diameter of a counterbore portion of the mounting hole. The cap disclosed in Patent Literature 3 has a burr storage groove in a central portion having an outer shape of an outer peripheral portion of the cap in a height direction, and a lower side of the burr storage groove is used as an interference portion. In order to prevent an upper surface from deforming due to the deformation when the cap is inserted into a hole, ribs are provided inside the cap to improve rigidity.

### CITATION LIST

### PATENT LITERATURE

Patent Literature 1: JP2013-137101A
Patent Literature 2: JP2007-10036A
Patent Literature 3: JP5958530B

### SUMMARY OF INVENTION

### TECHNICAL PROBLEM

However, the cap of Patent Literature 1 has several interference portions with the mounting holes on an outer peripheral portion, and the total contact area is reduced. While this shape has the advantage that the interference is small and insertion is easy, depending on severe usage conditions, the interference portion is shaved during insertion, making it impossible to obtain a large fixing force. In addition, since the interference portion approaches an upper surface, there is a risk that debris from the interference portion that is shaved during insertion comes out to the upper portion and becomes foreign matter. In addition, the cap of Patent Literature 2 has the main body made of metal to improve the flatness of an upper surface, and an elastomeric material is used for the interference portion to obtain a fixing force due to the elasticity thereof. However, since the elastomer is locally crushed, depending on the conditions of use, there is a possibility that the fixing force is reduced early due to a creep phenomenon or the like. In addition, the combined structure with metal tends to be costly. Further, the cap of Patent Literature 3 has the burr storage groove in the central portion having the outer shape of the outer peripheral portion of the cap in the height direction, and the lower side of the burr storage groove is used as the interference portion. However, since the overall rigidity is improved, there are cases where deformation of the interference occurs locally, and in these cases, stress concentration is likely to occur. Therefore, there is a risk that the fixing force of the cap decreases due to change over time by the creep phenomenon of the resin material.

The present invention has been made in view of the above situation, and an object thereof is to provide a linear motion guiding device capable of suppressing retention of foreign matter on the upper surface of the guide rail while maintaining the fixing force of the cap fixed to the mounting hole of the guide rail.

### SOLUTION TO PROBLEM

The above object of the present invention will be achieved by the following configurations.
(1) A linear motion guiding device including: a guide rail; a slider that moves with respect to the guide rail; and a plurality of rolling elements housed in the slider, in which the guide rail has a mounting hole for fixing to a mounting portion with a bolt, the mounting hole has a counterbore portion that accommodates a head portion of the bolt and a shaft accommodation portion that accommodates a shaft portion of the bolt, a cap that is press-fitted into the mounting hole and closes the counterbore portion is provided, the cap is formed by integrally molding a disk-shaped main body portion that closes an opening portion of the counterbore portion and a cylinder portion that extends from the main body portion to a side opposite to the opening portion of the counterbore portion, the cylinder portion includes an interference portion having an outer diameter that allows an interference fit between the cylinder portion and the counterbore portion, and a foreign matter accommodation portion positioned between the main body portion and the interference portion and having a diameter smaller than that of the main body portion, a notch groove is formed in a shaft direction on an outer periphery of the interference portion, and in the main body portion, a main body portion top surface before press-fitting is a curved surface that is recessed toward the cylinder portion as going toward an axial center of the cap such that the main body portion top surface on a side opposite to the cylinder portion in the shaft direction of the main body portion becomes nearly flat due to radially inward deflection of the cylinder portion caused by the press-fitting into the mounting hole.
   According to this linear motion guiding device, when the cap is inserted into the counterbore portion of the mounting hole, a diameter of the cylinder portion of the cap is reduced, and the vicinity of a central portion of the main body portion expands and deforms toward the side opposite to the cylinder portion. Therefore, by forming the main body portion top surface of the cap before press-fitting in the curved surface that is recessed toward the cylinder portion as going toward the axial center of the cap, the main body portion top surface becomes nearly flat due to the expansion and deformation caused by the press-fitting. As a result, the main body portion top surface with an expanding central part and an upper surface of the guide rail are flush with each other, and recesses in which foreign matter is retained on the upper surface of the guide rail can be reduced. Therefore, it is possible to suppress retention of foreign matter on the upper surface of the guide rail while maintaining the fixing force of the cap to the mounting hole of the guide rail.
(2) The linear motion guiding device according to (1), in which an outer diameter of the main body portion is smaller than an outer diameter of the interference portion.
   According to this linear motion guiding device, it is possible to reduce the outer diameter of the interference portion of the cap, that is, only the diameter of the cylinder portion, and to more effectively deform the main body portion top surface, which is formed to be recessed in advance, to become nearly flat.
(3) The linear motion guiding device according to (1) or (2), in which the cap is an integrally molded product made of polyacetal resin.
   According to this linear motion guiding device, water absorption can be reduced, and change over time can be reduced. In addition, molding shrinkage, heat resistance, and impact resistance can be ensured. Further, since the cap is molded from a single material, the unit price can be kept low.
(4) The linear motion guiding device according to any one of (1) to (3), in which the cap has an inner hole having a bottom wall on the main body portion side and a side wall extending toward a side opposite to the main body portion on the cylinder portion side, and surfaces of the bottom wall and the side wall of the inner hole, and the main body portion top surface are each formed of a surface without reinforcing ribs.

According to this linear motion guiding device, since the bottom wall surface and the main body portion top surface, which are the front and back surfaces of the main body portion, and the side wall of the cylinder portion do not have reinforcing ribs, the main body portion can suppress non-uniform increase in rigidity, and can increase the flatness of the main body portion top surface, which is formed to be recessed in advance, after expansion and deformation.

### ADVANTAGEOUS EFFECTS OF INVENTION

According to the linear motion guiding device according to the present invention, it is possible to suppress retention of foreign matter on the upper surface of the guide rail while maintaining the fixing force of the cap fixed to the mounting hole of the guide rail.

### BRIEF DESCRIPTION OF DRAWINGS

Fig. 1 is a perspective view of a linear motion guiding device according to an embodiment of the present invention.
Fig. 2 is a cross-sectional view of a guide rail in the vicinity of a mounting hole shown in Fig. 1.
Fig. 3 is a perspective view of a cap shown in Fig. 1.
Fig. 4 is a perspective view of the cap shown in Fig. 3 as seen obliquely from below.
Fig. 5 is a half-sectional view of the cap shown in Fig. 3.
Fig. 6 is a bottom view of the cap shown in Fig. 3.
Fig. 7A is a cross-sectional view of the cap before being inserted into the mounting hole, and Fig. 7B is a cross-sectional view of the cap after being inserted into the mounting hole.
Fig. 8A is a plan view of a conveying device having a linear motion guiding device, omitting a table, and Fig. 8B is a cross-sectional view taken along line VIII-VIII of Fig. 8A including a table.

### DESCRIPTION OF EMBODIMENTS

Next, embodiments according to the present invention will be described with reference to the drawings.

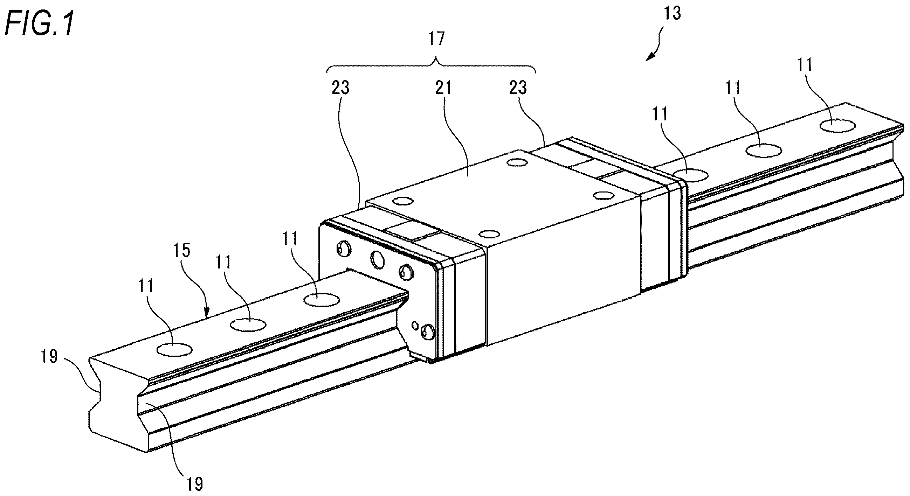

Fig. 1 is a perspective view of a linear motion guiding device 13 according to an embodiment of the present invention.

The linear motion guiding device 13 of the embodiment has a guide rail 15, a slider 17 that moves with respect to the guide rail 15, and a plurality of rolling elements (not shown) housed in the slider. Guide rail side track surfaces 19 are formed along the longitudinal direction of the guide rail 15 on side surfaces on both sides of the guide rail 15.

The slider 17 includes a slider main body 21 and a pair of end caps 23 provided at both end portions of the slider main body 21 in the moving direction (longitudinal direction). The slider main body 21 and the end cap 23 are installed to straddle the guide rail 15 with both longitudinal cross sections forming a U-shaped cross section. Slider side track surfaces are formed on inner side surfaces on both sides of the slider main body 21 to face the guide rail side track surfaces 19, respectively.

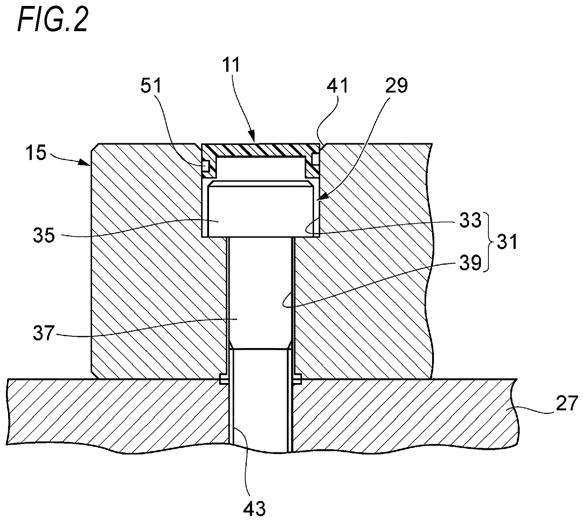

Fig. 2 is a cross-sectional view of the guide rail 15 in the vicinity of a mounting hole shown in Fig. 1.

A mounting hole 31 is formed in the guide rail 15 of the linear motion guiding device 13. The guide rail 15 is fixed to a mounting portion 27 such as a base using a bolt 29 through the mounting hole 31. After the guide rail 15 is fixed to the mounting portion 27 with the bolt 29, the cap 11 is mounted on a counterbore portion 33 of the mounting hole 31.

Specifically, the bolt 29 has a head portion 35 and a shaft portion 37. The mounting hole 31 is a through-hole that includes the counterbore portion 33 that accommodates the head portion 35 of the bolt 29 and a shaft accommodation portion 39 that accommodates the shaft portion 37 of the bolt 29. The counterbore portion 33 has a larger diameter than the circumscribed circle of the head portion 35 of the bolt 29, has a bearing surface on the mounting portion side, and is open on the side opposite to the mounting portion side, and a chamfered portion 41 is formed on an opening portion of the counterbore portion 33. The shaft portion 37 has a diameter larger than the outer diameter of the shaft portion 37 of the bolt 29 and a diameter smaller than that of the counterbore portion 33, and penetrates from the bearing surface of the counterbore portion 33 to the mounting portion side. The bolt 29 is inserted into the mounting hole 31 of the guide rail 15, the shaft portion 37 is screwed into a female thread portion 43 formed in the mounting portion 27, and accordingly, the guide rail 15 is fixed to the mounting portion 27.

The mounting hole 31 is closed by press-fitting the cap 11 onto the counterbore portion 33 after the guide rail 15 is fixed to the mounting portion 27 by the bolt 29. The cap 11 is driven into the counterbore portion 33 by a hammer or the like via a driving jig such as a backing plate.

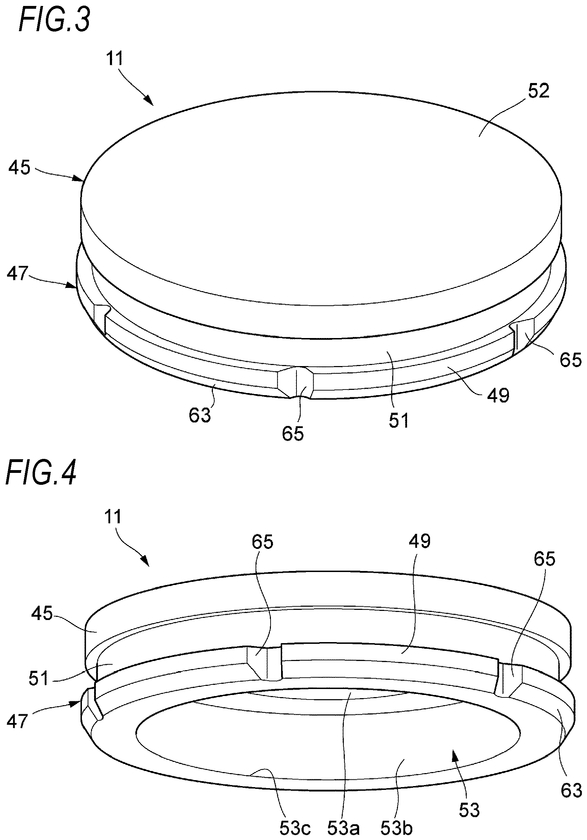

Fig. 3 is a perspective view of the cap 11 shown in Fig. 1, and Fig. 4 is a perspective view of the cap 11 shown in Fig. 3 as seen obliquely from below.

The cap 11 is an integrally molded product having a disk-shaped main body portion 45 that closes the opening portion of the counterbore portion 33 (refer to Fig. 2), and a cylinder portion 47 extending from the main body portion 45 to one side in a shaft direction (the direction on a side opposite to the opening portion of the counterbore portion 33 when press-fitting into the mounting hole 31). In the cylinder portion 47, an interference portion 49 having an outer diameter larger than that of the main body portion 45 and an outer diameter that allows an interference fit between the cylinder portion 47 and the counterbore portion 33, and a foreign matter accommodation portion 51 positioned between the main body portion 45 and the interference portion 49 and having a diameter smaller than that of main body portion 45 are formed. Foreign matter such as burrs generated from the interference portion 49 when the cap 11 is driven into the counterbore portion 33 is accommodated in the space formed between the inner wall of the counterbore portion 33 and an outer periphery of the foreign matter accommodation portion 51.

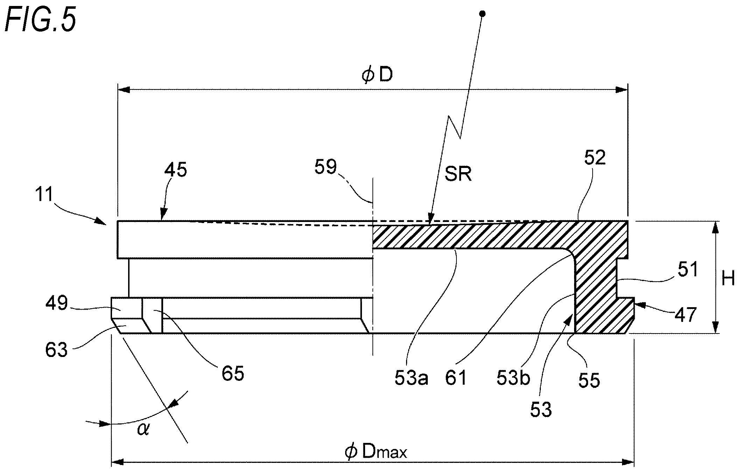

Fig. 5 is a half-sectional view of the cap 11 shown in Fig. 3.

The cap 11 has a substantially U-shaped cross-section when cut along a plane passing through a central axis 59. That is, an inner hole 53 is formed with the hollow portion on the inner diameter side of the cylinder portion 47 and the disk-shaped main body portion 45.

That is, the inner hole 53 has a bottom wall 53a on the main body portion 45 side, and a side wall 53b extending toward a side opposite to the main body portion on the cylinder portion 47 side. The tip end on the side opposite to the main body portion of the side wall 53b is an opening 53c. The inner hole 53 is formed in a single hole shape without providing reinforcing ribs on the bottom wall 53a and the side walls 53b.

At a height H in the shaft direction of the cap 11, the interference portion 49 is positioned within a range of H / 2 on the side opposite to the main body portion. Further, an outer diameter ϕD of the main body portion 45 is formed smaller than an outer diameter ϕDmax of the interference portion 49 (ϕDmax > ϕD).

In the main body portion 45, a main body portion top surface 52 of the main body portion 45 is not a flat surface but a curved surface that is recessed toward the cylinder portion as going toward the center such that the main body portion top surface 52 of the main body portion 45 (the surface on the side opposite to the bottom wall: the surface on the side opposite to the cylinder portion in the shaft direction) becomes nearly flat due to the radially inward deflection of the cylinder portion 47 caused by the press-fitting into the mounting hole 31. For example, the main body portion top surface 52 on the side opposite to the cylinder portion in the shaft direction of the main body portion 45 may be recessed by forming a part of a spherical surface with a sufficiently large radius of curvature SR. In addition, this curved surface does not need to be a single R, and an optimum curved surface may be obtained by simulation or the like such that the main body portion top surface 52 becomes flat after being press-fitted into the mounting hole. Since the cap 11 is driven into the mounting hole 31 by a hammer or the like via a driving jig such as a backing plate, when the entire main body portion top surface 52 is a curved surface, there is a risk that the edge portion on the outer peripheral side is crushed, and the cap 11 is obliquely inserted into the mounting hole 31. Therefore, it is preferable to leave a slightly straight portion (the plane orthogonal to the central axis 59) at the edge portion of the main body portion top surface 52 of the main body portion 45. Further, the main body portion top surface 52 is not provided with reinforcing ribs in order to make the deformation caused by the press-fitting uniform.

Further, the inner hole 53 is formed with a chamfered portion 61 at the internal corner portion with the bottom wall 53a. The end surface on the side opposite to the main body portion of the interference portion 49 is formed to be tapered by a tapered portion 63 having an inclination angle α with respect to the central axis 59. Further, the axial thickness between the main body portion top surface 52 of the main body portion 45 and the bottom wall 53a excluding the chamfered portion 61 is set to be thinner than the radial thickness between the outer periphery of the foreign matter accommodation portion 51 and the inner diameter of the inner hole 53 excluding the chamfered portion 61.

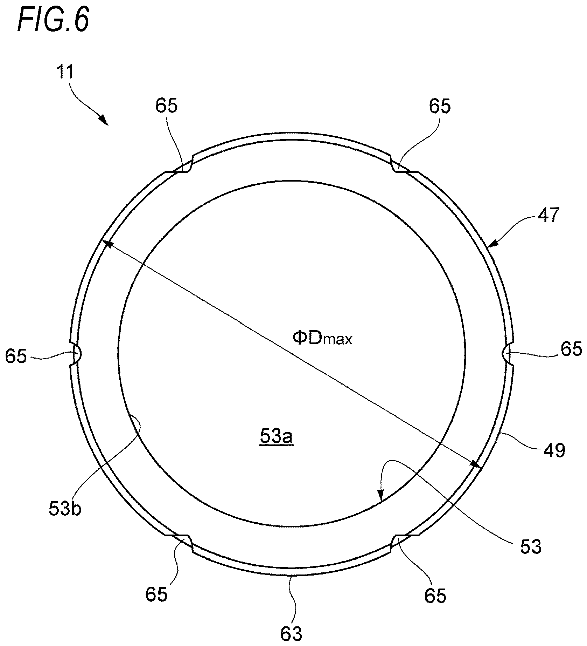

Fig. 6 is a bottom view of the cap 11 shown in Fig. 3.

The cap 11 is configured such that a contact area between the interference portion 49 and the counterbore portion 33 is increased to uniformly receive a force over a wide range in a circumferential direction, thereby uniformly deforming the entire cap. In addition, the interference portion 49 has an outer diameter cpDmax larger than the diameter of the mounting hole 31 by an interference. In other words, the structure is configured such that a force is received by an arcuate surface having a predetermined peripheral length, rather than by the interference due to partial projection portions.

A notch groove 65 is formed in the interference portion 49 along the shaft direction such that the air in the closed mounting hole 31 can escape when the cap is inserted.

In addition, the notch groove 65 cuts off the burr generated by press-fitting the interference portion 49. The purpose of removing the air is achieved as long as there is one notch groove 65, but the larger number of the notch groove 65 facilitates cutting off the burr. Moreover, in order to make the deformation of the interference portion 49 uniform in the circumferential direction, it is desirable that the notch grooves 65 are arranged at three or more locations uniformly. In the present embodiment, as shown in Fig. 6, there are six notch grooves 65, but the number is not limited to this and can be increased or decreased.

A material of the cap 11 preferably has excellent wear resistance. Further, it is necessary to prevent the cap 11 from being deformed due to the lubricant applied to an upper surface of the guide rail 15 from the slider 17 during travel. Therefore, as the material of the cap 11, polyamide, polyacetal resin, or the like is used as plastic. As the thermoplastic elastomer, a polyamide-based thermoplastic elastomer is used. In consideration of molding shrinkage of the cap 11, polyamide-based plastic or polyamide-based elastomer is preferable. Further, in consideration of heat resistance, a polyamide-based resin is preferable. Furthermore, since the cap 11 is press-fitted into the counterbore portion 33 by hitting the main body portion 45 from above with a hammer or the like via a driving jig, nylon is preferable as the polyamide-based plastic in consideration of impact resistance.

In the cap 11 according to the present embodiment, even when the notch groove 65 is formed in the interference portion 49 in the shaft direction, the interference portion 49 ensures a sufficient contact area with respect to an inner diameter surface of the counterbore portion 33. As a result, the stress between the inner diameter surface of the counterbore portion 33 and the interference portion 49 of the cap 11 is maintained for a long period of time, and the cap 11 does not sink into the counterbore portion 33 along the shaft direction.

Here, deformation of the cap 11 will be described in more detail.

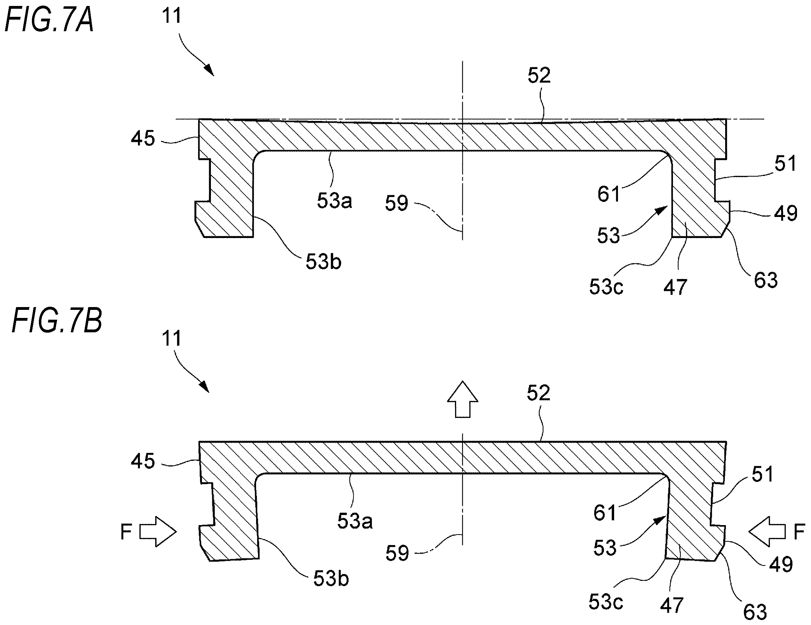

Fig. 7A is a cross-sectional view of the cap 11 before being inserted into the mounting hole 31, and Fig. 7B is a cross-sectional view of the cap 11 after being inserted into the mounting hole 31.

When the cap 11 is inserted into the counterbore portion 33, the interference portion 49 receives a reaction force F from the inner peripheral wall of the counterbore portion 33 (refer to Fig. 2), and accordingly, the diameter of the cap 11 is reduced. As a result, the moment is generated to lift the vicinity of the central axis 59 of the main body portion 45 toward the side opposite to the cylinder portion (the main body portion top surface side, the side opposite to the bottom wall) with the vicinity of the intersection of the main body portion 45 and the cylinder portion 47 as a fulcrum, and the vicinity of the central portion of the main body portion 45 expands and deforms toward the side opposite to the cylinder portion. At this time, since the main body portion top surface 52 of the main body portion 45 is a curved surface that is recessed toward the cylinder portion as going toward the axial center, the expansion and the deformation occur on the side opposite to the cylinder portion, and accordingly, the recess is eliminated and the main body portion top surface 52 becomes nearly flat. By making the main body portion top surface 52 of the main body portion 45 become nearly flat, it is possible to minimize the retention of foreign matter on the upper surface.

For example, in a cap in which the main body portion top surface 52 of the main body portion 45 is flat before being press-fitted into the mounting hole 31 in the related art, the main body portion top surface 52 expands toward the side opposite to the cylinder portion 47 side after being press-fitted into the mounting hole 31. Therefore, it is necessary to perform press-fitting until the expanding central part becomes flush with the upper surface of the guide rail 15 such that the expanding central part of the main body portion top surface 52 does not protrude from the upper surface of the guide rail 15 (the surface where the counterbore portion 33 of the mounting hole 31 opens). Therefore, the outer peripheral portion of the main body portion top surface 52 of the main body portion 45 is press-fitted into the upper surface of the guide rail 15 as deeply as the height of the expansion and deformation. Since a recess corresponding to the height remains on the upper surface of the guide rail 15, there is a risk that foreign matter is retained. On the other hand, in the cap 11 according to the present embodiment, the main body portion top surface 52 is the curved surface which is recessed toward the cylinder portion as going toward the center such that the main body portion top surface 52 becomes nearly flat due to the deflection of the cylinder portion 47 caused by press-fitting. Therefore, after the cap 11 is press-fitted, the main body portion top surface 52 becomes nearly flat, and thus the upper surface of the guide rail 15 can be less likely to have recesses in which foreign matter may be retained.

Further, the cap 11 is configured such that the entire cap is deformed by the reduction of the diameter of the interference portion 49, and stress concentration due to an external force is less likely to occur locally. That is, the shape is such that the internal stress can be easily dispersed throughout. Therefore, the cap 11 can minimize the creep phenomenon of the resin material. Moreover, since the cap 11 can be manufactured by injection molding of a single material, the unit price can be kept low.

Since the outer diameter of the main body portion 45 is smaller than the outer diameter of the interference portion 49, the air passing through the notch groove 65 can be easily discharged to the outside of the mounting hole 31. Therefore, the outer peripheral surface of the main body portion 45 does not locally adhere to the inner peripheral surface of the counterbore portion 33, and the main body portion top surface 52 of the main body portion 45 can be arranged flat as designed.

Moreover, by using polyacetal resin as the material of the cap 11, it is possible to reduce water absorption and change over time. In addition, molding shrinkage, heat resistance, and impact resistance can be ensured.

Further, the surfaces of the bottom wall 53a and the side walls 53b of the inner hole 53 of the cap 11 and the main body portion top surface 52 are formed of surfaces without reinforcing ribs, and are formed as surfaces without steps that are likely to cause local distortion. As a result, the main body portion 45 does not have an uneven increase in rigidity, and the shape that is recessed in advance can more easily become nearly flat.

### <Example of application to linear motion guiding device>

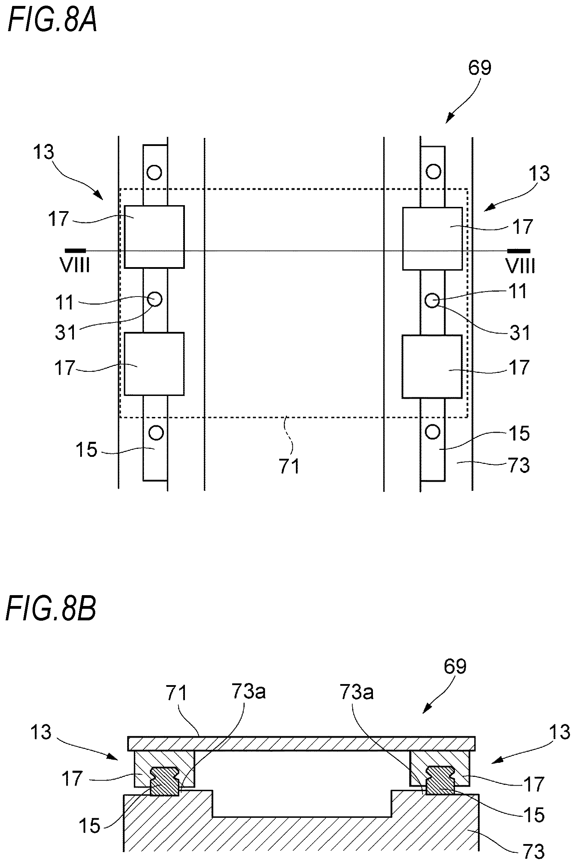

Fig. 8A is a plan view of a conveying device 69 having the linear motion guiding device 13, omitting a table, and Fig. 8B is a cross-sectional view taken along line VIII-VIII of Fig. 8A including a table 71.

The linear motion guiding device 13 having the mounting hole cap 11 of the present embodiment can be incorporated in the conveying device 69 which is a mechanical device as shown in Figs. 8A and 8B. That is, the linear motion guiding device 13 has a pair of guide rails 15 laid parallel to the upper surface of the base 73, and two sliders 17 are movably arranged on each guide rail 15. The upper surface of each slider 17 is fixed to the table 71. That is, the table 71 is supported to be linearly movable along the guide rail 15. The guide rail 15 is attached to the table 71 with high precision to abut on a step provided on the table 71, that is, a shoulder portion 73a.

As described above, even when the linear motion guiding device 13 having the mounting hole caps of the present embodiment is applied to the conveying device 69, the sinking of the cap 11 and the retention of foreign matter such as dust on the upper surface are suppressed, and good traveling performance of the slider 17 can be maintained for a long period of time. Also, foreign matter can be prevented from entering the mounting hole 31.

The present invention is not limited to the above-described embodiments, and combinations of the configurations of the embodiments with each other, modifications and applications by those skilled in the art based on the descriptions in the specification and well-known techniques are also contemplated by the present invention and are included in the scope of protection.

For example, in the above configuration example, the case where the mechanical device is a conveying device has been described as an example, but in addition to this, the mechanical device may be various devices such as a lathe, a drilling machine, a boring machine, a milling machine, a gear cutting machine, and a grinding machine.

The present application is based on Japanese Patent Application (No. 2021-055678) filed on March 29, 2021, and the content thereof is incorporated herein by reference.

### REFERENCE SIGNS LIST

11 Cap
13 Linear motion guiding device
15 Guide rail
29 Bolt
31 Mounting hole
33 Counterbore portion
35 Head portion
37 Shaft portion
39 Shaft accommodation portion
45 Main body portion
47 Cylinder portion
49 Interference portion
51 Foreign matter accommodation portion
52 Main body portion top surface
53 Inner hole
53a Bottom wall
53b Side wall
65 Notch groove

## Claims

1. A linear motion guiding device comprising:
a guide rail;
a slider that moves with respect to the guide rail; and
a plurality of rolling elements housed in the slider, wherein:
the guide rail has a mounting hole for fixing to a mounting portion with a bolt;
the mounting hole has a counterbore portion that accommodates a head portion of the bolt and a shaft accommodation portion that accommodates a shaft portion of the bolt;
a cap that is press-fitted into the mounting hole and closes the counterbore portion is provided;
the cap is formed by integrally molding a disk-shaped main body portion that closes an opening portion of the counterbore portion and a cylinder portion that extends from the main body portion to a side opposite to the opening portion of the counterbore portion;
the cylinder portion includes an interference portion having an outer diameter that allows an interference fit between the cylinder portion and the counterbore portion, and a foreign matter accommodation portion positioned between the main body portion and the interference portion and having a diameter smaller than that of the main body portion;
a notch groove is formed in a shaft direction on an outer periphery of the interference portion; and
in the main body portion, a main body portion top surface before press-fitting is a curved surface that is recessed toward the cylinder portion as going toward an axial center of the cap such that the main body portion top surface on a side opposite to the cylinder portion in the shaft direction of the main body portion becomes nearly flat due to radially inward deflection of the cylinder portion caused by the press-fitting into the mounting hole.

2. The linear motion guiding device according to claim 1, wherein
an outer diameter of the main body portion is smaller than an outer diameter of the interference portion.

3. The linear motion guiding device according to claim 1 or 2, wherein
the cap is an integrally molded product made of polyacetal resin.

4. The linear motion guiding device according to any one of claims 1 to 3, wherein:
the cap has an inner hole having a bottom wall on the main body portion side and a side wall extending toward a side opposite to the main body portion on the cylinder portion side; and
surfaces of the bottom wall and the side wall of the inner hole, and the main body portion top surface are each formed of a surface without reinforcing ribs.
